Europäisches Patentamt

European Patent Office

Office européen des brevets

(11) Numéro de publication: **0 227 529**
**B1**

(12) **FASCICULE DE BREVET EUROPEEN**

(45) Date de publication du fascicule du brevet:
**26.04.89**

(21) Numéro de dépôt: **86402628.1**

(22) Date de dépôt: **26.11.86**

(51) Int. Cl.⁴: **B60T 13/24**

(54) Servomoteur à dépression d'assistance au freinage.

(30) Priorité: **05.12.85 FR 8518008**

(43) Date de publication de la demande:
**01.07.87 Bulletin 87/27**

(45) Mention de la délivrance du brevet:
**26.04.89 Bulletin 89/17**

(84) Etats contractants désignés:
**DE ES GB IT**

(56) Documents cités:
**EP-A- 0 075 505**
**EP-A- 0 153 238**
**GB-A- 2 064 690**
**GB-A- 2 146 399**
**US-A- 3 688 647**

(73) Titulaire: **BENDIX France Société Anonyme dite:,
126, rue de Stalingrad, F-93700 Drancy(FR)**

(72) Inventeur: **Carre, Jean-Jacques, 59, Boulevard de l'Est,
F-93340 Le Raincy(FR)**

(74) Mandataire: **Lejet, Christian et al, Division Technique
Service Brevets BENDIX Europe 126, rue de Stalingrad,
F-93700 Drancy(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne les servomoteurs dépression d'assistance au freinage, pour véhicules automobiles, du type comprenant un boîtier comportant une paroi arrière et divisée intérieurement en une chambre avant ou chambre à dépression, et une chambre arrière, ou chambre de travail, par une structure de piston sollicitée par un ressort de piston vers la paroi arrière du boîtier et comprenant un moyeu renfermant un moyen de valve de distribution comportant un premier siège de clapet, formé par le moyeu, un second siège de clapet, coaxial au premier siège de clapet, formé par l'extrémité d'un plongeur de valve coulissant dans un alésage du moyeu et couplé à une tige d'actionnement du servomoteur, typiquement reliée à une pédale de freinage du véhicule, et un élément de clapet monté dans le moyeu et sollicité axialement par un ressort de clapet vers les premier et second sièges de clapet pour coopérer avec ces derniers, un ressort de rappel de tige, disposé dans le moyeu, coaxialement à la tige, et un organe de retenue du plongeur, disposé dans un logement radial du moyeu et comportant une zone d'extrémité intérieure s'étendant dans l'alésage du moyeu et formant une surface de butée coopérant sélectivement en butée axiale avec un épaulement du plongeur, l'organe de retenue étant placé, lorsque la structure de piston revient en position de repos au voisinage de la paroi arrière du boîtier, dans une première position limitant, par sa surface de butée, le retrait du plongeur de valve sous l'effet du ressort de rappel de tige.

Un servomoteur de ce type est décrit dans le document GB-A 2 064 690. Dans l'agencement de ce document, l'organe de retenue est reçu avec possibilité de débattement axial dans le logement radial du moyeu et comporte des pattes externes destinées à venir porter axialement en butée contre une portion centrale de la paroi arrière du boîtier pour immobiliser en position de repos le plongeur de valve avant que la structure de piston ne vienne à son tour occuper sa position de repos, en butée contre une portion périphérique de la paroi arrière du boîtier. Avec un tel agencement, en phase finale de défreinage, le ressort de rappel de la structure de piston doit vaincre, alors qu'il se trouve en sa condition de compression minimale, la force du ressort de rappel de la tige d'actionnement déjà immobilisée en position de repos par l'organe de retenue, de sorte que le ressort de rappel de piston doit être largement dimensionné, ce qui entraîne une perte de sensibilité du servomoteur lors de sa mise en œuvre. D'autre part, dans cet agencement, la position de repos du second siège de clapet est déterminée, via l'organe de retenue, par la portion centrale de la paroi arrière du boîtier tandis que la position de repos du premier siège de clapet (dans le moyeu) est déterminée par la portion périphérique de la paroi arrière du boîtier de sorte que, compte-tenu des chaînes de tolérance axiales propres à la structure de piston d'une part, et surtout celles (difficilement maîtrisables),de la paroi arrière du boîtier d'autre part, l'obtention d'une course morte réduite ne peut être déterminée avec précision dans des fabrications en très grande série. En raison de ces chaînes de tolérances, le logement radial du moyeu, recevant l'organe de retenue, doit être surdimensionné axialement, de sorte que l'organe de retenue peut adopter, dans le logement, une position en biais susceptible d'induire, en fonctionnement, un couple indésirable sur le plongeur et de gripper ce dernier dans son alésage. La position de repos de l'organe de retenue étant déterminée par rapport à la portion centrale de la paroi arrière du boîtier et non pas par rapport au moyeu lui-même, si le réglage de course morte du piston de maître-cylindre associé au servomoteur nécessite un réglage avec avancement axial de la structure de piston, comme décrit par exemple dans le document EP-A 0 075 505, du fait que l'organe de retenue tend à demeurer plaqué contre la paroi arrière du boîtier, une course morte réduite ne peut être conservée en raison du réglage axial de la structure de piston. Enfin, l'organe de retenue n'étant pas plaqué contre une paroi du logement dans la position de repos, le test dit "d'arrachement" – imposé par certains constructeurs –, consistant à exercer une traction importante sur la tige d'actionnement (simulant un soulèvement de pédale accidentel par le pied d'un utilisateur du véhicule) peut entraîner une déformation non élastique de la clé annihilant pour la suite l'obtention d'une course morte réduite.

La présente invention a pour objet d'éviter ces inconvénients en proposant un agencement de servomoteur dans lequel la position de repos de l'organe de retenue (et donc du plongeur) est déterminée par rapport au logement du moyeu dans lequel il coulisse en étant guidé radialement, indépendamment des tolérances axiales de la paroi arrière du boîtier et du moyeu.

Pour ce faire, selon l'invention, la zone d'extrémité intérieure de l'organe de retenue comporte une première et une seconde surface de butée décalées axialement et radialement l'une de l'autre, l'organe de retenue étant déplaçable radialement dans le logement, en fonction du déplacement axial de la structure de piston, entre une première et une seconde position dans lesquelles les premières et secondes surfaces de butée sont respectivement disposées en regard, axialement, de l'épaulement du plongeur.

Selon une caractéristique plus particulière de la présente invention, les premières et secondes surfaces de butée sont planes et parralèlles et reliées l'une à l'autre par une surface de rampe.

Avec un tel agencement, lors d'une phase de freinage, l'organe de retenue est placé dans sa seconde position, avec sa seconde surface de butée interposée axialement dans l'alésage du plongeur, de sorte que, lors d'un relâchement de l'effort de freinage sur la tige d'actionnement, le plongeur, sous l'effet du ressort de rappel de tige, est autorisé à se déplacer d'une certaine distance ample vers l'arrière avant de venir en butée contre la seconde surface de butée de l'organe de retenue, en ménageant ainsi une surouverture importante de l'élément de clapet favorisant un rééquilibrage rapide en pression entre les chambres du servomoteur. Par contre, en fin de phase de défreinage, lorsque la structure de piston revient vers sa position de repos au voisinage de la paroi arrière du boîtier, l'organe de retenue est sollicité avec anticipation vers sa première position, avec sa première surface de butée, constituée par sa face avant, venant en appui contre l'épaulement du plongeur, en réavançant ainsi le plongeur dans l'alésage du moyeu pour l'obtention d'une course morte réduite déterminée avec précision quelle que soit la position exacte de repos finalement adoptée par la structure de piston dans le boîtier et quelles que soient les tolérances axiales, et dans une large mesure radiales, de la paroi arrière du boîtier.

D'autres caractéristiques et avantages de la présente invention ressortiront de la description suivante de modes de réalisation, donnés à titre illustratif mais nullement limitatif, faite en relation avec des dessins annexés, sur lesquels:

La figure 1 est une vue en coupe longitudinale partielle d'un servomoteur à dépression d'assistance au freinage selon l'invention;

les figures 2 et 3 sont des vues en coupe à plus grande échelle montrant les deux positions de l'organe de retenue du plongeur de valve;

les figures 4 et 5 sont des vues respectivement de face et de côté de l'organe de retenue des figures 2 et 3,

les figures 6 et 7 sont des vues, analogues à celles des figures 2 et 3, respectivement, d'un second mode de réalisation de l'invention; et

les figures 8 et 9 sont des vues schématiques en coupe transversales montrant les deux positions de l'organe de retenue des figures 6 et 7.

Dans la description qui va suivre et sur les dessins, les éléments identiques ou analogues portent les mêmes chiffres de référence, éventuellement indicés.

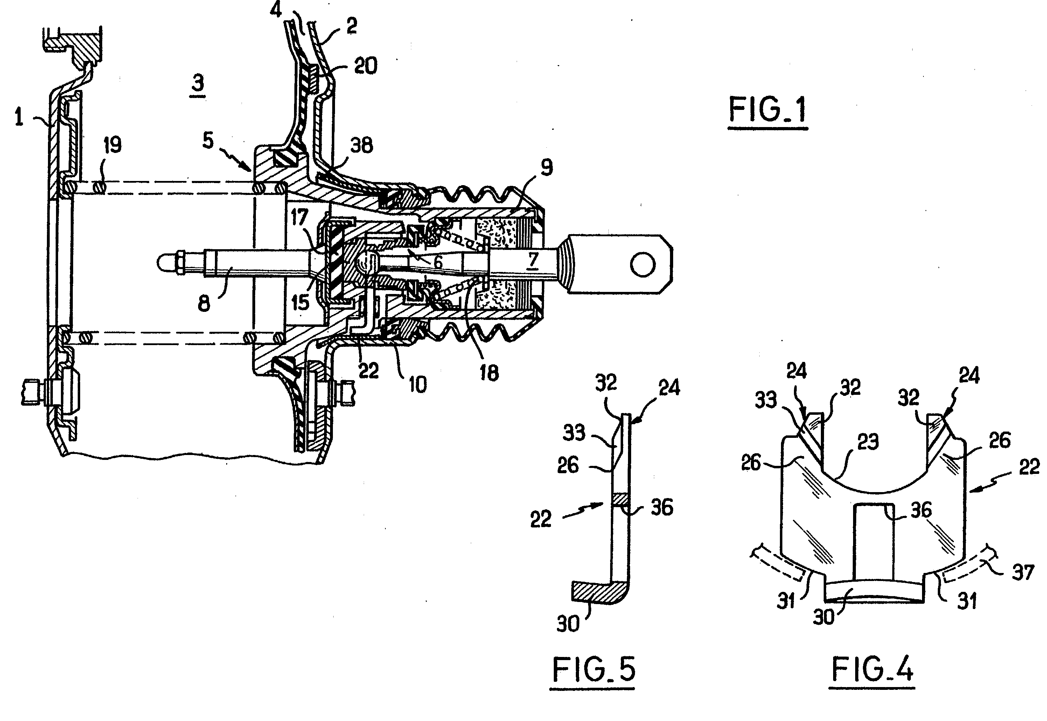

On reconnait sur la figure 1 un servomoteur à dépression d'assistance au freinage comprenant un boîtier, constitué par l'assemblage périphérique étanche d'une paroi avant 1 et d'une paroi arrière 2 et divisé intérieurement en une chambre avant ou chambre à dépression 3 et une chambre arrière, ou chambre de travail 4, par une structure de piston comportant un moyeu central désigné généralement par la référence 5 et renfermant un moyen de valve de distribution, désigné généralement par la référence 6, actionnable par une tige d'actionnement 7 couplée typiquement à une pédale de freinage (non représentée) d'un véhicule, pour actionner la structure de piston et, partant, un organe de sortie 8 porté par le moyeu 5 et destiné à être couplé typiquement à un piston primaire d'un maître-cylindre (non représenté) associé au servomoteur.

Le moyen de valve de distribution 6, disposé typiquement dans une partie de prolongation arrière tubulaire 9 du moyeu 5 coulissant dans une cheminée arrière 10 de la paroi arrière 2 du boîtier, comprend un élément de clapet élastique 11, sollicité axialement vers l'avant par un ressort de clapet 12 pour coopérer avec un premier siège de clapet annulaire 13 formé centralement dans le moyeu 5, et avec un second siège de clapet annulaire 14, coaxial au précédent, formé par l'extrémité arrière d'un plongeur de valve 15 couplé à l'extrémité avant de la tige d'actionnement 7 et coulissant dans un alésage étagé central 16 du moyeu. Un disque de réaction 17, en matériau élastomère, est interposé entre la face avant du plongeur 15 et l'extrémité arrière de l'organe de sortie 8. Un ressort de rappel de tige 18, prenant appui dans le moyeu 5, typiquement sur le support de l'élément de clapet 11, sollicite vers l'arrière la tige d'actionnement 7 et le plongeur de valve associé 15. Un ressort de rappel de piston 19, disposé dans la chambre à dépression 3, sollicite la structure de piston vers la paroi arrière 2, la structure de piston venant porter en butée, en position inactive du servomoteur, contre cette paroi arrière 2, par exemple contre un renfort central 20 de cette paroi arrière 2.

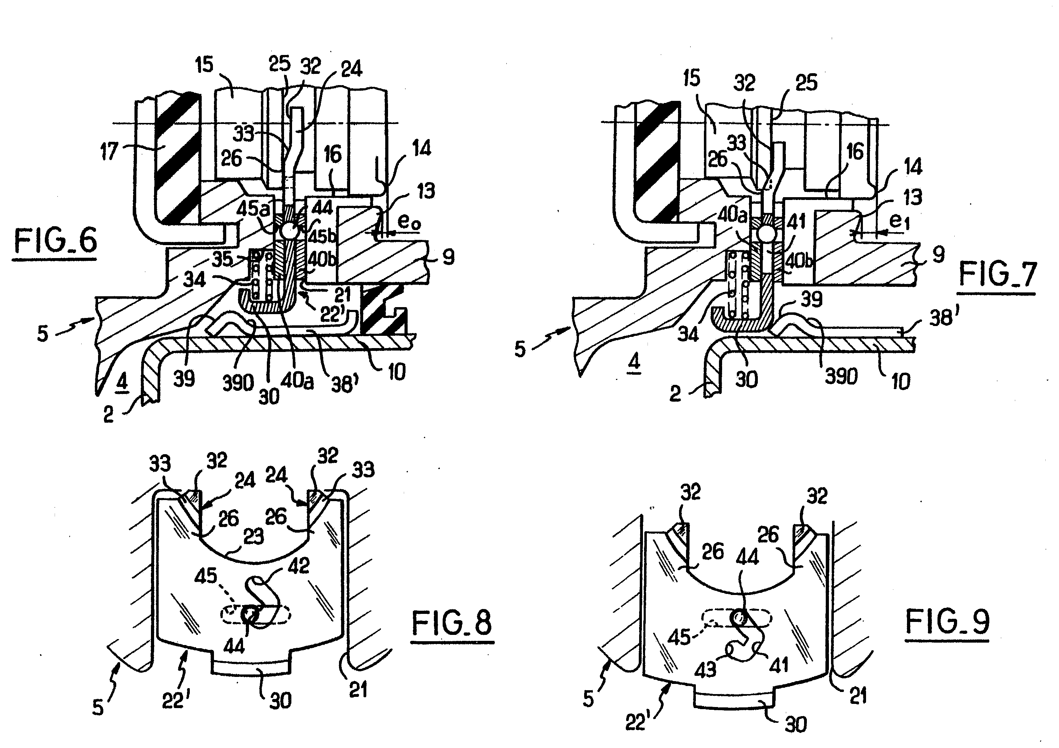

Conformément à l'invention, dans un logement radial 21 (figure 8 et 9) du moyeu 5 débouchant dans l'alésage 16 et formant en même temps passage de communication entre la chambre de travail 4 et le moyeu de valve 6, est monté de façon pouvoir se déplacer radialement un organe de retenue 22, réalisé typiquement à partir d'une plaque métallique et comprenant à son extrémité supérieure une découpe 23 définissant deux bras 24 s'étendant partiellement dans l'alésage 16 du plongeur 15 en entourant une gorge centrale périphérique du plongeur 15 formant un épaulement radial annulaire 25 dirigé vers l'arrière susceptible de coopérer en butée avec les bras 24. Dans le mode de réalisation des figures 1 à 5, l'organe de retenue, constitué à partir d'une plaque épaisse, comporte une face avant plane 26, formant première surface de butée, et une face arrière plane 27 parallèle guidées à coulissement contre deux parois transversales planes en regard 28 et 29 du logement 21, et une patte d'extrémité extérieure 30 repliée en forme de L se raccordant à la partie principale de l'organe de retenue 22 en formant deux épaulement latéraux 31 (figure 4). Conformément un aspect de l'invention, l'extrémité des pattes 24 forme des secondes surfaces de butée coplanaires 32 parallèles au plan de la face de butée avant 26 et décalées axialement et radialement de cette dernière, le raccordement entre les surfaces de butée 32 et la face 26 s'effectuant par des surfaces de rampe 33 de contour, en vue de face, sensiblement en forme d'arcs de cercle centrès sur le centre du fond du logement 23. Dans une partie centrale élargie du logement 21 est disposé un ressort 34 coopérant avec une surface d'appui s'étendant axialement 35 formée dans la partie centrale élargie du logement 21, le ressort 34 étant également logé dans une ouverture oblongue radialement 36 de l'organe de retenue 22. Le ressort 34 tend ainsi à déplacer radialement l'organe de retenue 22 vers l'extérieur du moyeu 5, ce déplacement vers l'extérieur de l'organe de retenue 22 étant limité par un organe de maintien monté sur le moyeu et constitué par exemple sous la forme d'un jonc en forme de C 37 encerclant le moyeu et dont les extrémités en regard font saillie dans le logement 21 pour coopérer en butée avec les épaulements 31 de l'organe de retenue 22. Dans la cheminée 10 est monté un élément tubulaire 38 comportant une extrémité avant s'évasant vers l'extérieur et constituant ainsi intérieurement une surface de rampe 39 convergeant tout d'abord vers l'arrière puis se raccordant à une surface cylindrique droite coaxiale à l'axe du servomoteur.

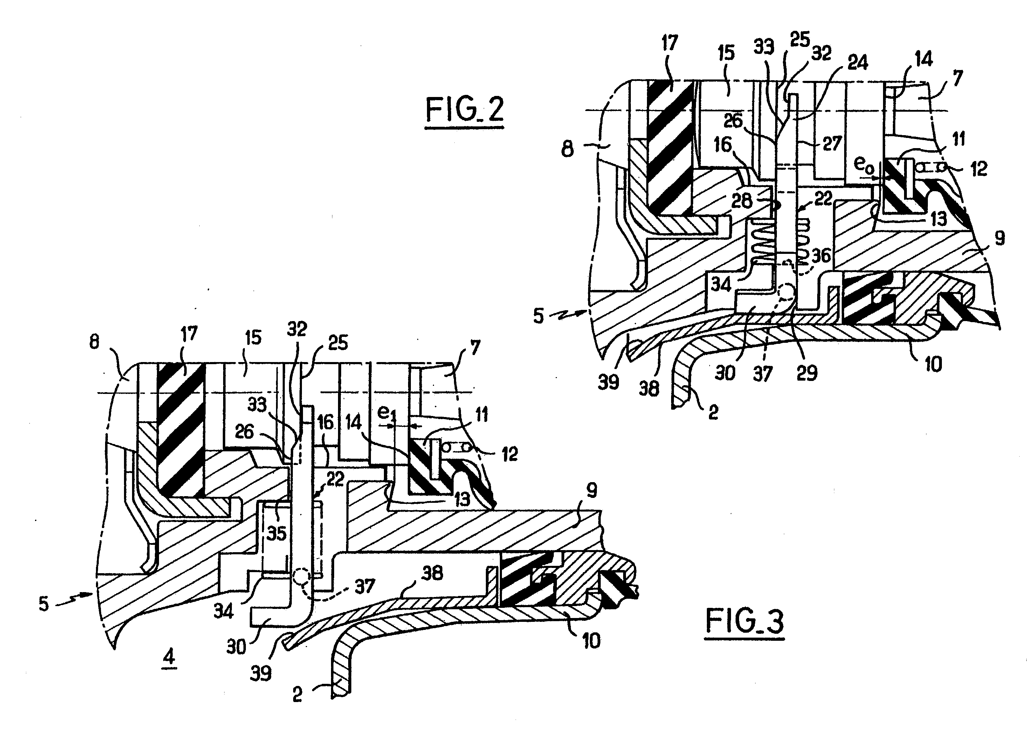

Ainsi, lors d'une phase de freinage, lorsque la structure de piston est déplacée vers la paroi avant 1 du boîtier, l'organe de retenue 22 adopte la position "sortie" représenteé sur la figure 3 sous l'effet du ressort 34 et du maintien par l'organe de maintien 37. Dans ces conditions la zone périphérique à la découpe 23 de la face avant 26 de l'organe de retenue est positionnée en dehors de l'alésage 16 et ce sont les secondes surfaces de butée axialement en retrait 32 des pattes 24 qui demeurent interposées sur le trajet de l'épaulement 25 du plongeur 15. Quand, lors d'un freinage, l'effort sur la tige d'actionnement 7 est momentanément relâché, la tige 7 et le plongeur 15 reculent par rapport au moyeu 5 sous l'effet du ressort de rappel de tige 18, ce retrait du plongeur étant limité par la venue en butée de l'épaulement 25 contre les secondes surfaces de butée 32, ce qui définit ainsi une levée maximum de l'élément de clapet 11 ménageant un jeu important $e_1$ dit de surouverture au retour entre l'élément de clapet 11 et le premier siège de clapet 13 favorisant un rééquilibrage rapide en pression des chambres 3 et 4 du servomoteur. Par contre, en fin de phase de défreinage, lorsque l'effort sur la tige d'actionnement 7 est totalement relâché, la structure de piston revient, sous l'effet du ressort de piston 19, vers la paroi arrière 2 du boîtier. Ce faisant, bien avant que la structure de piston n'atteigne sa position de repos, la patte d'extrémité 30 de l'organe de retenue 22 vient porter contre la surface de rampe 39 de l'élément tubulaire 38 et, en glissant sur cette dernière, provoque un déplacement radial vers l'intérieur de l'organe de retenue 22 à l'encontre du ressort 34. Ce mouvement radial vers l'intérieur de l'organe de retenue 22, amène l'épaulement 25 du plongeur 15 à glisser contre les surfaces de rampe 33, en ramenant ainsi le plongeur 15 vers l'avant à l'encontre du ressort de rappel de tige 18, jusqu'à ce que l'épaulement 25 vienne en butée franche contre la portion périphérique de la découpe 23 de la face avant 26 présentement interposée dans le trajet de déplacement de l'épaulement 25. Dans cette condition, atteinte juste avant que la structure de piston n'occupe sa position de repos propre, lorsque la patte 30 a fini de gravir la surface de rampe 39, le plongeur est maintenu dans une position avancée ménageant entre le premier siège de clapet 13 et l'élément de clapet 11 un jeu $e_0$ dit de course morte extrémement réduit et défini avec précision par les tolérances de l'épaisseur de l'organe de retenue 22, ce jeu $e_0$ étant maintenu quelle que soit la position axiale relative de la structure de piston par rapport à la paroi arrière du boîtier 2 et indépendamment donc des tolérances de fabrication de cette dernière, conformément à l'objet de l'invention. La patte 30 d'actionnement de l'organe de retenue 22 peut être avantageusement revêtue ou surmoulée d'une couche d'un matériau plastique à faible coefficient de friction favorisant ainsi l'actionnement de l'organe de retenue et supprimant les bruits de contact entre la patte 30 et la surface de rampe 39.

On a représenté sur les figures 6 à 9 un autre mode de réalisation selon l'invention où l'organe de retenue, désigné ici par la référence 22', peut être immobilisé de façon déverrouillable dans l'une ou l'autre des première et seconde positions décrites plus haut. Dans ce mode de réalisation, l'organe de retenue est guidé à coulissement entre contre-plaques parallèles 40a, 40b montées à force dans le logement 21 et comporte, dans sa partie centrale, une découpe fermée sensiblement en forme de J 41 ménageant deux extrémités arrondies alignées radialement 42 et 43 dans lesquelles peut être immobilisée une bille 44 maintenue de façon à pouvoir se déplacer librement latéralement dans deux ouvertures oblongues coïncidentes 45a, 45b formées dans les plaques 40a et 40b. Le ressort de sollicitation 34 conserve son appui entre la surface intérieure 35 dans le moyeu et porte ici, par son autre extrémité, contre la patte d'extrémité 30 de l'organe de retenue 22'. L'élément tubulaire formant rampe 38' monté dans la cheminée 10 présente ici, outre une première surface de rampe 39 comme dans le mode de réalisation précédent, une seconde surface de rampe 390 formant avec la précédente un profil en V, les deux rampes étant avantageusement situées directement dans la cheminée 10. Le fonctionnement de ce second mode de réalisation apparaît clairement sur les figures 6 à 9. Dans la position de la figure 6, correspondant à la course morte réduite $e_0$, l'organe de retenue 22' est verrouillé en position haute dans le moyeu (première position), à l'encontre du ressort 34, par la bille 44 qui se trouve logée et maintenue logée dans l'arrondi d'extrémité inférieur 43. Lorsque, lors d'une phase de freinage, la structure de piston est avancée vers la paroi avant 1 du boîtier, la patte d'extrémité 30 de l'organe de retenue 22' vient en contact avec la surface de rampe arrière 390, cette dernière contraignant l'organe de retenue 22' à se déplacer légèrement vers l'intérieur, ce qui a pour effet de dégager latéralement la bille 44 de l'arrondi d'extrémité 43, de sorte que, dès que la patte d'extrémité 30 a franchit le sommet entre les deux surfaces de rampe 39 et 390, le ressort 34 peut déplacer vers l'extérieur l'organe de retenue 22' jusqu'à ce que la bille 44 vienne occuper l'autre arrondi d'extrémité 42, en immobilisant ainsi l'organe de retenue dans la position "sortie" (seconde position) représentée sur la figure 7 et correspondant à l'obtention d'une surouverture $e_1$. En fin de phase de défreinage, l'opération inverse s'accomplit: la patte 30 de l'organe de retenue 22' vient cette fois en contact avec la surface de rampe 39 qui force l'organe de retenue à se déplacer radialement vers l'intérieur pour occuper de nouveau la configuration représentée sur la figure 6 avec le plongeur 15 repoussé vers l'avant et son épaulement 25 en butée contre la face avant 26 de l'organe de retenue 22'. On notera, que dans la variante représentée sur les figures 6 et 7, les surfaces de butée axialement décalées 32 et 26 sont obtenues par déformation de l'extrémité des pattes 24 de l'organe de retenue 22' réalisé ici à partir d'un élément de plaque d'épaisseur réduite.

**Revendications**

1. Servomoteur à dépression d'assistance au freinage pour véhicules automobiles, comprenant: un boîtier comportant une paroi arrière (2) et divisé intérieurement en une chambre à dépression (3) et une chambre de travail (4) par une structure de piston sollicitée par un ressort de piston (19) vers la paroi arrière du boîtier et comprenant un moyeu (5) renfermant un moyen de valve de distribution (6) comportant un premier siège de clapet (13), formé par le moyeu, un second siège de clapet (14), coaxial au premier siège de clapet et formé par l'extrémité d'un plongeur de valve (15) coulissant dans un alésage (16) du moyeu et couplé à une tige d'actionnement (7) du servomoteur, un élément de clapet (11) monté dans le moyeu et sollicité axialement par un ressort de clapet (12) vers les premier (13) et second (14) sièges de clapet pour coopérer avec ces derniers, un ressort de rappel de tige (18), disposé dans le moyeu, coaxialement à la tige (7), et un organe de retenue de plongeur (22; 22'), disposé dans un logement radial (21) du moyeu et comportant une zone d'extrémité intérieure (24) s'étendant dans l'alésage (16) du moyeu (5) et formant une surface de butée (26, 32) coopérant sélectivement en butée axiale avec un épaulement (25) du plongeur, l'organe de retenue (22; 22') étant placé, lorsque la structure de piston revient en position de repos au voisinage de la paroi arrière (2) du boîtier, dans une première position limitant, par sa surface de butée (26), le retrait du plongeur (15) sous l'effet du ressort de rappel de tige (18), caractérisé en ce que la zone d'extrémité intérieure de l'organe de retenue (22; 22') comporte une première (26) et une seconde (32) surface de butée décalées axialement et radialement l'une de l'autre, et en ce que l'organe de retenue (22; 22') est déplaçable radialement dans le logement (21), en fonction du déplacement axial de la structure de piston, entre une première et une seconde position dans lesquelles les premières (26) et secondes (32) surfaces de butée sont respectivement disposées en regard, axialement, de l'épaulement (25) du plongeur (15).

2. Servomoteur selon la revendication 1, caractérisé en ce que les premières (26) et secondes (32) surfaces de butée sont planes et parallèles et reliées l'une à l'autre par une surface de rampe (33).

3. Servomoteur selon la revendication 1 ou la revendication 2, caractérisé en ce que l'organe de retenue (22; 22') comporte une zone d'extrémité extérieure (30) coopérant avec au moins une surface de rampe stationnaire (39; 390) dans le boîtier.

4. Servomoteur selon la revendication 3, caractérisé en ce qu'il comporte un organe élastique (34) sollicitant radialement l'organe de retenue (22; 22') vers sa seconde position .

5. Servomoteur selon la revendication 4, caractérisé en ce qu'il comporte un organe de maintien (37; 44) de l'organe de retenue (22; 22') dans le logement (21).

6. Servomoteur selon la revendication 5, caractérisé en ce qu'il comporte un moyen déverrouillable de maintien (44) de l'organe de retenue dans chacune desdites première et seconde positions.

7. Servomoteur selon l'une quelconque des revendications précédentes, caractérisé en ce que la zone d'extrémité intérieure de l'organe de retenue (22; 22') présente une forme en U, les premières (26) et secondes (32) surfaces de butée étant formées sur les branches (24) du U.

8. Servomoteur selon l'une quelconque des revendications précédentes, caractérisé en ce que l'organe de retenue (22; 22') est réalisé à partir d'une plaque métallique.

9. Servomoteur selon la revendication 8, caractérisé en ce que l'organe de retenue (22) est guidé en translation radiale par des surfaces axialement en regard (28, 29) du logement (21).

10. Servomoteur selon les revendications 6 et 8, caractérisé en ce que l'organe de retenue (22') est guidé en translation radiale par deux plaques (40a, 40b) montées dans le logement (21) et avec lesquels coopère le moyen de maintien (44).

**Patentansprüche**

1. Unterdruckbremskraftverstärker für Kraftfahrzeuge, mit einem Gehäuse, das eine rückwärtige Wand (2) aufweist und im Inneren in eine Unterdruckkammer (3) und eine Arbeitskammer (4) von einer Kolbenanordnung unterteilt ist, die von einer Kolbenfeder (19) in Richtung auf die rückwärtige Wand des Gehäuses vorgespannt ist und eine Nabe (5) enthält, wobei die Nabe (5) eine Verteilerventileinrichtung (6) einschließt, welche besteht aus einem von der Nabe gebildeten ersten Ventilsitz (13), einem zweiten Ventilsitz (14), der zum ersten Ventilsitz koaxial ist und von dem Ende eines Ventilstößels (15) gebildet wird, welcher in einer Bohrung (16) der Nabe gleitet und mit einer Betätigungsstange (7) des Verstärkers verbunden ist, einem Ventilglied (11), das in der Nabe angeordnet ist und von einer Ventilfeder (12) in Richtung auf den ersten (13) und zweiten (14) Ventilsitz axial vorgespannt wird, um mit diesem zusammenzuarbeiten, einer Stangenrückholfeder (18), die in der Nabe koaxial zu der Stange (7) angeordnet ist, und einem zum Zurückhalten des Stößels dienenden Halteteil (22; 22'), das in einer radialen Ausnehmung (21) der Nabe angeordnet ist und einen inneren Endbereich (24) aufweist, welcher sich in der Bohrung (16) der Nabe (5) erstreckt und eine Anschlagfläche (26, 32) bildet, die wahlweise mit einer Schulter (25) des Stößels in axialer Anlage zusammenwirkt, wobei das Halteteil (22; 22'), wenn die Kolbenanordnung in die Ruhestellung benachbart zur rückwärtigen Wand (2) des Gehäuses zurückkehrt, in einer ersten Stellung angeordnet ist, welche durch seine Anschlagfläche (26) die Rückkehrbewegung des Stößels (15) unter der Wirkung der Stangenrückholfeder (18) begrenzt, dadurch gekennzeichnet, daß der innere Endbereich des Halteteils (22; 22') eine erste (26) und eine zweite (32) Anschlagfläche aufweist, die axial und radial zueinander versetzt sind, und daß das Halteteil (22; 22') in Abhängigkeit von einer Axialverschiebung der Kolbenanordnung in der Aufnahme (21) zwischen einer ersten und einer zweiten Stellung radial verschiebbar ist, in denen die erste (26) und zweite (32) Anschlagfläche jeweils axial gegenüber der Schulter (25) des Stößels (15) angeordnet sind.

2. Verstärker nach Anspruch 1, dadurch gekennzeichnet, daß die erste (26) und zweite (32) Anschlagfläche eben und parallel ausgebildet und durch eine Rampenfläche (33) miteinander verbunden sind.

3. Verstärker nach Anspruch 1 oder 2, dadurch gekennzeichnet, daß das Halteteil (22; 22') einen äußeren Endbereich (30) aufweist, der mit mindestens einer stationären Rampenfläche (39; 390) im Gehäuse zusammenwirkt.

4. Verstärker nach Anspruch 3, dadurch gekennzeichnet, daß er ein elastisches Teil (34) aufweist, das das Halteteil (22; 22') radial in Richtung auf seine zweite Stellung vorspannt.

5. Verstärker nach Anspruch 4, dadurch gekennzeichnet, daß er ein Sperrteil (37; 44) aufweist, das das Halteteil (22; 22') in der Aufnahme (21) hält.

6. Verstärker nach Anspruch 5, dadurch gekennzeichnet, daß er ein entriegelbares Sperrmittel (44) aufweist, das das Halteteil in der ersten und zweiten Stellung hält.

7. Verstärker nach einem der vorhergehenden Ansprüche, dadurch gekennzeichnet, daß der innere Endbereich des Halteteils (22; 22') eine U-Form hat, wobei die erste (26) und die zweite (32) Anschlagfläche an den Schenkeln (24) des U gebildet sind.

8. Verstärker nach einem der vorhergehenden Ansprüche, dadurch gekennzeichnet, daß das Halteteil (22; 22') aus einem Blechteil hergestellt ist.

9. Verstärker nach Anspruch 8, dadurch gekennzeichnet, daß das Halteteil (22) in radialer Richtung translationsförmig durch Flächen (28, 29) geführt ist, die der Aufnahme (21) axial gegenüberliegen.

10. Verstärker nach den Ansprüchen 6 und 8, dadurch gekennzeichnet, daß das Halteteil (22') in radialer Richtung translationsförmig durch zwei Platten (40a, 40b) geführt ist, die in der Aufnahme (21) angebracht sind und mit denen das Sperrmittel (44) zusammenwirkt.

**Claims**

1. Vacuum brake-booster, for vehicles comprising: a housing having a rear wall (2) and divided internally into a vacuum chamber (3) and a working chamber (4) by a piston structure biased by a piston spring (19) towards the rear wall of the housing and comprising a hub (5) enclosing a distribution valve means (6) having a first valve seat (13) formed by the hub, a second valve seat (14) coaxial relative to the first valve seat and formed by the end of a valve plunger (15) sliding in a bore (16) of the hub and coupled to an actuating rod (7) of the booster, a valve member (11) mounted in the hub and biased axially by a valve spring (12) towards the first (13) and second (14) valve seats, to cooperate with the latter, a rod return spring (18) arranged in the hub coaxially relative to the rod (7), and a plunger-positioning member (22; 22') arranged in a radial recess (21) of the hub and having an inner end zone (24) extending in the bore (16) of the hub (15) and forming a stop surface (26, 32) cooperating selectively in axial bearing engagement with a shoulder (25) of the plunger, the positioning member (22; 22'), when the piston structure returns into a rest position in the vicinity of the rear wall (2) of the housing, being placed in a first position which, by means of its stop surface (26), limits the retraction of the plunger (15) caused by the rod return spring (18), characterized in that the inner end zone of the positioning member (22; 22') has a first (26) and a second (32) stop surface which are offset axially and radially relative to one another, and in that the positioning member (22; 22') is radially displaceable in the recess (21), as a function of the axial displacement of the piston structure, between a first and a second position, in which the first (26) and the second (32) stop surfaces are respectively located axially opposite the shoulder (25) of the plunger (15).

2. Booster according to Claim 1, characterized in that the first (26) and second (32) stop surfaces are plane and parallel and are joined to one another by a ramp surface (33).

3. Booster according to Claim 1 or Claim 2, characterized in that the positioning member (22; 22') has an outer end zone (30) cooperating with at least one stationary ramp surface (39; 390) in the housing.

4. Booster according to Claim 3, characterized in that it comprises an elastic member (34) biasing the positioning member (22; 22') radially towards its second position.

5. Booster according to Claim 4, characterized in that it comprises a retaining member (37; 44) retaining the positioning member (22; 22') in the recess (21).

6. Booster according to Claim 5, characterized in that it further comprises releasable retaining means (44) for retaining the positioning member in each of its said first and second positions.

7. Booster according to any one of the preceding claims, characterized in that the inner end zone of the positioning member (22; 22') is U-shaped, the first (26) and second (32) stop surfaces being formed on branches (24) of the U.

8. Booster according to any one of the preceding claims, characterized in that positioning member (22; 22') is produced from a metal plate.

9. Booster according to Claim 8, characterized in that the positioning member (22) is guided in radial translation by axially facing surfaces (28, 29) in the recess (21).

10. Booster according to Claims 6 and 8, characterized in that the positioning member (22') is guided in radial translation by two plates (40a, 40b) which are mounted in the recess (21) and with which the releasable retaining means (44) cooperates.

FIG.1

FIG.4

FIG.5

FIG_2

FIG_3

EP 0 227 529 B1

FIG_7

FIG_9

FIG_6

FIG_8